(19) Europäisches Patentamt
European Patent Office
Office européen des brevets

(11) **EP 3 658 862 B1**

(12) **EUROPÄISCHE PATENTSCHRIFT**

(45) Veröffentlichungstag und Bekanntmachung des Hinweises auf die Patenterteilung:
**26.05.2021 Patentblatt 2021/21**

(21) Anmeldenummer: **18743460.0**

(22) Anmeldetag: **18.07.2018**

(51) Int Cl.:
*G01F 1/76* (2006.01)　　　*G01G 1/00* (2006.01)
*A01J 25/00* (2006.01)

(86) Internationale Anmeldenummer:
**PCT/EP2018/069511**

(87) Internationale Veröffentlichungsnummer:
**WO 2019/020459 (31.01.2019 Gazette 2019/05)**

(54) **MESSUNG EINES MASSEDURCHFLUSSES**

MEASUREMENT OF A MASS FLOW

MESURE D'UN DÉBIT MASSIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.07.2017 DE 102017116601**

(43) Veröffentlichungstag der Anmeldung:
**03.06.2020 Patentblatt 2020/23**

(73) Patentinhaber: **Hochland SE**
**88178 Heimenkirch (DE)**

(72) Erfinder:
• **HARTMANN, Robert**
**88178 Heimenkirch (DE)**
• **ROTHER, Matthias**
**88239 Wangen im Allgäu (DE)**

(74) Vertreter: **Braun-Dullaeus Pannen Emmerling Patent- & Rechtsanwaltspartnerschaft mbB Platz der Ideen 2 40476 Düsseldorf (DE)**

(56) Entgegenhaltungen:
EP-A2- 1 459 808　　　JP-A- 2006 285 726
US-A1- 2002 166 589

**Beschreibung**

Die Erfindung betrifft ein Verfahren zum Bestimmen eines spezifischen Massendurchflusses eines hochviskosen Lebensmittelproduktes mit einer Viskosität von größer als 100 cP (0,1 Pa·s), insbesondere größer als 1000 cP (1 Pa·s), wobei das Lebensmittelprodukt, das insbesondere eine hochviskose bis pastöse Schmelzkäserohmischung ist, während der Verarbeitung in einem kontinuierlichen Förderstrom einem Pufferbehälter mittels einer Förderpumpe zu- oder abgeführt wird. Die Erfindung betrifft außerdem ein System zur Durchführung des Verfahrens. Bekanntermaßen können Messungen des Massedurchflusses eines fließfähigen Produktes mit herkömmlichen Massendurchflussmesssonden vorgenommen werden. Für diese Zwecke sind insbesondere magnetisch-induktive Durchflussmesser (MID) bekannt, bei denen das Produkt, das eine zumindest geringe Leitfähigkeit aufweisen muss, durch ein metallisches Rohr fließt, das von einem Magnetfeld durchsetzt ist. In dem Rohr befinden sich Messelektroden, mit denen die durch den Produktfluss bedingte Änderung der induktiv erzeugten Messspannung gemessen wird. Im Fall von Schmelzkäserohmischungen liefern solche MIDs insbesondere wegen Anhaftungen des Produktes im Rohr und an den Sonden nach kurzer Zeit der Benutzung nur noch bedingt zuverlässige Messwerte.

Außerdem sind Massendurchflussmesser bekannt, die auf dem Coriolis-Prinzip beruhen. Bei diesen Durchflussmessern wird ein von dem Produkt durchströmter Rohrbogen in Schwingungen versetzt, die mit an den Enden des Rohrbogens angebrachten Sensoren gemessen werden, wobei aus dem Phasenunterschied auf den Massedurchfluss geschlossen wird. Für die Messung an hochviskosen Produkten, wie den Schmelzkäserohmischungen, sind solche Sensoren ungeeignet, da sie wegen der gebogenen Leitungen schnell verstopfen. Zudem sind diese Massendurchflussmesser vergleichsweise teuer.

In der Praxis kann der Massedurchfluss eines solchen hochviskosen Produktes auch mittels der Förderpumpe bestimmt werden, die das Produkt während der Verarbeitung durch die Rohrleitungen pumpt. Diese Bestimmungen stehen unter der vereinfachenden Annahme, dass die Drehzahl der Pumpe mit linearer Pumpenkennlinie in unmittelbarer Proportionalität zur geförderten Masse steht. Bei einem Produkt, wie einer Schmelzkäserohmischung ist diese Annahme jedoch wegen der erheblichen Dichteschwankungen respektive der Porosität nur bedingt gerechtfertigt, so dass die Art der Messung insbesondere bei wechselnden Produkten schnell an ihre Grenze kommt, zumal sich auch der Schlupf in der Pumpe mit der Zeit ändert. Daher ist die Annahme des linearen Massedurchflusses zwar bei bekanntem Betriebszustand gerechtfertigt und die Genauigkeit der Durchflussmessung ausreichend; auf längere Sicht muss das System jedoch immer wieder neu kalibriert werden.

Im Übrigen kann der Durchfluss über eine zeitliche Änderung der Masse eines Produktes in einem Pufferbehälter als quasi "gleitenden Durchschnitt" mittels einer Wiegeeinrichtung bestimmt werden. Dabei wird das abnehmende Gewicht des Pufferbehälters gemessen, das sich aus der Abfuhr des Produktes aus dem Pufferbehälter hin zu weiteren Verarbeitungsstufen ergibt. Mit diesem sogenannten "Loss in Weight Feeding" ist es möglich, den gemittelten Massedurchfluss unabhängig von dem Produkt und dessen Dichte recht genau abzuschätzen. Solche Verfahren sind beispielsweise aus der US 2004/0186621 A1, dem US 4,796,782 und dem US 3,252,618 bekannt. Mit dieser Methode des "Loss in Weight Feeding" können allerdings kurzfristigen Schwankungen, die innerhalb des Messintervalls vorkommen, nicht erfasst werden.

Aus der JP 2003-075213 A ist ein solches "Loss in Weight Feeding" bekannt, bei dem zusätzlich ein Betriebsparameter der Förderpumpe gemessen wird, um rechnerisch einen Volumen Durchsatz bestimmen zu können.

Aufgabe der Erfindung ist es nunmehr, ein Verfahren vorzuschlagen, das sich einfach und kostengünstig umsetzen lässt und mit dem sich ein aktueller und spezifischer Massendurchfluss eines hochviskosen Lebensmittelproduktes, wie insbesondere einer Schmelzkäserohmischung, zuverlässig während der Verarbeitung bestimmen und mit dem sich eine Leistungsregelung der Förderpumpe auch bei unterschiedlichen Zuständen des Lebensmittelproduktes bewerkstelligen lässt. Zudem ist es die Aufgabe, ein entsprechendes System zur Durchführung des Verfahrens zu schaffen.

Diese Aufgaben werden durch das Verfahren nach Anspruch 1 und das System nach Anspruch 9 gelöst. Bevorzugte Ausgestaltungen ergeben sich aus den jeweiligen Unteransprüchen.

Der Kern der Erfindung liegt anspruchsgemäß in einer Kombination zweier der oben beschriebenen Verfahren. Erfindungsgemäß wird zum Einen die zeitliche Änderung der Masse ($\Delta m/\Delta t$) des Lebensmittelproduktes in dem Pufferbehälter mittels einer Wiegeeinrichtung über einen definierten Zeitraum, der insbesondere im Bereich einer oder mehrerer Minuten liegt, ermittelt. Zugleich wird in demselben Zeitraum ein Pumpenparameter der Förderpumpe registriert, von dem eine Proportionalität zu der erwarteten Förderleistung anzunehmen ist. Als solcher Parameter eignet sich beispielsweise die Frequenz des Frequenzumrichters, mit dem der Motor der Förderpumpe angesteuert wird. Diese Frequenz steht in einer bestimmten Proportionalität zur Drehzahl der Förderpumpe. Erfindungsgemäß werden die Änderungen des ausgewählten Pumpenparameters über den Zeitraum gemittelt, so dass sich ein Mittelwert, mithin ein "mittlerer Pumpenparameter", ergibt. Aus diesen Messgrößen wird dann ein Wert für den aktuellen "spezifischen" Massendurchfluss als Quotient aus der zeitlichen Änderung der Masse $\Delta m/\Delta t$ und dem über dieselbe Zeit gemittelten Pumpenparameter errechnet und zur weiteren Verarbeitung ausgegeben. Mit dem Wert für den spezifischen Massendurchfluss lässt sich dann wiederum unter der Annahme der Linearität des Pumpenparameters ein tatsächlicher Massendurchfluss einstellen.

Das Verfahren führt zu besonders zuverlässigen Messwerten, da sich einerseits mittels der Förderpumpe über den Pumpenparameter, beispielsweise der "Drehzahl" - respektive über die dazu proportionale Frequenz des Frequenzumrichters in [Hz] - die kurzfristigen Schwankungen erfassen lassen und es andererseits die Wiegezelle ermöglicht, die mittlere Änderung der Masse in einer Gewichtseinheit, wie Kilogramm oder Pound, über den Zeitraum der Messung exakt festzustellen. Aus der Änderung des Puffergewichtes über den Zeitraum und aus der durchschnittlichen Drehzahl der Förderpumpe mit linearer Pumpenkennlinie lässt sich dann ein Wert für eine "spezifische Förderleistung" in einer Einheit "Masse pro Pumpenparameter", insbesondere Masse pro Drehzahl oder Frequenz des Umrichters, beispielsweise in kg/Hz oder ib/Hz, errechnen und über einen definierten Zeitraum mitteln. Durch Multiplikation dieses Wertes für die "spezifische Förderleistung" mit dem aktuell eingestellten Pumpenparameter, beispielsweise der Frequenz, kann dann auf den aktuellen Massenfluss geschlossen werden.

Mit der erfindungsgemäßen Vorgehensweise lassen sich Lebensmittelprodukte unterschiedlichster Konsistenzen und Temperaturen verarbeiten: Besonders geeignet ist das Verfahren für die Verarbeitung von pastösen und/oder stückigen Käsemischungen und/oder Käseprodukten, zur Verarbeitung von Fleischprodukten, wie Hackfleisch und stückiger Fleischmasse, zur Verarbeitung von Obst und Gemüse in stückiger oder breiiger Konsistenz, zur Verarbeitung von Baby- und Tiernahrung, sowie zur Verarbeitung jedes anderen pumpbaren Lebensmittelproduktes.

Ein besonderer Vorteil der erfindungsgemäßen Vorgehensweise liegt darin, dass sich der aktuelle Massedurchfluss eines kalt oder heiß zu verarbeitenden Lebensmittelproduktes jederzeit sehr genau bestimmen bestimmen lässt, so dass mit dem Lebensmittelprodukt eine Rezeptur entsprechend genau umgesetzt werden kann, bei der dem Lebensmittelprodukt weitere Zutaten, wie Wasser, Gewürze und Farbstoffe, beigemengt werden.

Vorteilhafterweise wird der Zeitraum, über den die Masseänderung ermittelt und der Pumpenparameter registriert wird, in Abhängigkeit der Charakteristika des Lebensmittelproduktes und dessen Verhalten während der Verarbeitung vorgegeben. Generell sollte der Zeitraum so lang gewählt werden, dass zu erwartende kurzfristige Schwankungen herausgemittelt werden. Andererseits darf der Zeitraum nicht so lang gewählt werden, dass sich die Charakteristika des Lebensmittelproduktes und das Verhalten im Prozess ändern. Im Falle zu verarbeitender Schmelzkäsezubereitungen haben sich Zeiträume in der Größenordnung einer halben Minute bis zu wenigen Minuten bewährt.

Da die spezifische Förderleistung jeweils aktuell gemessen wird, ist das erfindungsgemäße Verfahren unempfindlich gegenüber Änderungen Verhältnisse wie der Pumpeneigenschaften und der Eigenschaften des zu pumpenden Produktes, dessen Viskosität, Porosität, Dichte und Reibwert im Laufe der Verarbeitung schwanken können. Insbesondere die Unempfindlichkeit gegenüber hohen Viskositäten und Porositäten macht das Verfahren besonders geeignet für den Einsatz bei der Verarbeitung von Schmelzkäserohmischungen. Wegen der ständig aktuellen Messungen ist entsprechend auch der Verschleiß der Pumpe im Messergebnis berücksichtigt.

Ersichtlich lässt sich die Erfindung darin zusammenfassen, dass der mit den oben genannten Fehlern behafteten Wert des Massendurchflusses, der über den Parameter der Förderpumpe eingestellt wird, mit einem aktuell gemessenen und gemittelten Wert der Masseänderung, wie er sich aus der Wiegung ergibt, korrigiert wird. Beispielsweise kann über die Wiegeeinrichtung eine Masseabnahme im Pufferbehälter von 50 kg innerhalb der letzten Minute festgestellt worden sein. In diesem Zeitraum hat sich die Förderpumpe mit einer mittleren Drehzahl von 3 Umdrehungen pro Sekunde bei entsprechend am Frequenzumrichter eingestellten 40 Hz gedreht. Aus diesen Werten ergibt sich erfindungsgemäß ein aktueller spezifischer Massendurchfluss von 75 kg pro (h*Hz).

Charakteristische Parameter bei der Verarbeitung einer Schmelzkäserohmischung sind für die Drehzahl der Förderpumpe knapp 300 Umdrehungen pro Minute, was mit einer Drehzahl am Motor der Förderpumpe von knapp 1500 Umdrehungen pro Minute und einer Frequenz am Frequenzumrichter von 50Hz einher geht.

Die solchermaßen ermittelte Größe lässt sich als "spezifische" Förderleistung bezeichnen, weil sie von der Zeit letztendlich unabhängig ist. Schließlich würde sich die Zeiteinheit bei der Berechnung zu [kg/(h*Hz)] = [kg/(h*(Umdrehungen/h))] = [kg/Umdrehung] heraus kürzen.

Unter der Annahme, dass die Förderpumpe bezüglich des registrierten Pumpenparameters eine lineare Kennlinie hat, kann die so errechnete "spezifische" Förderleistung dazu genutzt werden, den für den Verarbeitungsprozess des hochviskosen Lebensmittelproduktes gewünschten Massendurchfluss im laufenden Betrieb über die Vorgabe des Pumpenparameters, insbesondere über die Vorgabe der Frequenz des Frequenzumrichters, exakt einzustellen.

Das erfindungsgemäße Verfahren lässt sich besonders vorteilhaft bei der Verarbeitung solcher Lebensmittelprodukte einsetzen, die lediglich eine definierte Zahl unterschiedlicher Betriebszustände aufweisen, wobei sich die Betriebszustände definieren über die Fähigkeit, von der Förderpumpe gepumpt zu werden. Die fraglichen Schmelzkäserohmischungen sind Lebensmittelprodukte mit nur wenigen Betriebszuständen, über die sich die Kennlinie der Förderpumpe jeweils linear verhält. Vorteilhafterweise wird das lineare Verhalten der Betriebszustände für die Regelung der Förderpumpe und insbesondere zur Einstellung eines bestimmten Förderstromes im Rahmen einer Abfülllinie genutzt.

Wie sich herausgestellt hat, eignet sich das erfindungsgemäße Verfahren für die Verarbeitung von hochviskosen bis pastösen Lebensmittelprodukten, insbesondere von Schmelzkäserohmischungen, die bei ihrer Verarbeitung eine Viskosität von größer als 1000 cP (1 Pa·s), insbesondere von größer als 5000 cP (5 Pa·s), aufweisen. So haben typische Schmelzkäserohmischungen Viskositäten zwischen 10.000 cP und 40.000 cP (zwischen 10 Pa·s und 40 Pa·s).

Nachfolgend wird die Erfindung anhand eines in der Figur gezeigten Ausführungsbeispiels näher erläutert:

Die Figur zeigt das Schema eines Systems zum Bestimmen des erfindungsgemäßen spezifischen Massendurchflusses eines hochviskosen Lebensmittelproduktes, das eine Viskosität von größer als 1000 cP (1 Pa·s) aufweist. Das hier gezeigte System ist

eingebunden in einen Verarbeitungsprozess, bei dem im vorliegenden Fall verschiedene Sorten Naturkäse zu einer Schmelzkäserohmischung 1 vermengt und einem Pufferbehälter 2 über eine Rohrleitung 3 zugeführt werden. Im Rahmen nachfolgender Verarbeitungsstufen wird diese Schmelzkäserohmischung aufgeschmolzen, um am Ende einer das Produkt formenden und verpackenden Maschine zugeführt zu werden. Für den Transport des Produktes durch die Rohrleitungen werden entsprechend konzipierte Förderpumpen 4 eingesetzt.

Im gezeigten Ausführungsbeispiel wird die Schmelzkäserohmischung 1 von der Förderpumpe 4 aus dem Pufferbehälter 2 über eine Rohrleitung 5 abgeführt. Der Förderpumpe 4 ist ein Steuergerät 6 zugeordnet, das über die bidirektionale Datenleitung 11 die Drehzahl und damit die aktuelle Fördermenge mittels eines Frequenzumrichters einstellt. Der Pufferbehälter 2 steht auf einer Wiegeeinrichtung 7, mit der das durch einen möglichst kontinuierlichen Förderstrom abnehmende Gewicht des Pufferbehälters 2 als zeitliche Änderung der Masse (Δm/Δt) gemessen und über einen vorgebbaren definierten Zeitraum gemittelt wird. Der Wert der gemittelten zeitlichen Änderung der Masse

$$\frac{\Delta m}{\Delta t} = \dot{m} \quad [kg/h]$$

wird über eine Datenleitung 8 an ein Mittel 9 zur Berechnung des spezifischen Massendurchflusses ausgegeben. Das Mittel wird dabei von einem Computer 9 realisiert.

Zeitgleich wird über ein entsprechendes Mittel, hier durch das Steuergerät 6, ein zu der zu erwartenden Förderleistung proportionaler Pumpenparameter, im vorliegenden Fall insbesondere der Mittelwert der zur Ansteuerung verwendeten Frequenz in Hz, die der Pumpendrehzahl proportional ist, bestimmt. Auch dieser Wert

$$\bar{f}[Hz]$$

wird über eine Datenleitung 10 an den Computer 9 ausgegeben. Aus der in dem definierten Zeitraum gemessenen gemittelten Änderung der Masse und dem etwa in demselben Zeitraum ermittelten gemittelten Pumpenparameter berechnet der Computer 9 den aktuellen spezifischen Massendurchfluss als Quotient der beiden Eingangsgrößen im vorliegenden Fall zu

$$\dot{m}_{spez} = \frac{\dot{m}}{\bar{f}} \quad \left[\frac{kg}{h\,Hz}\right].$$

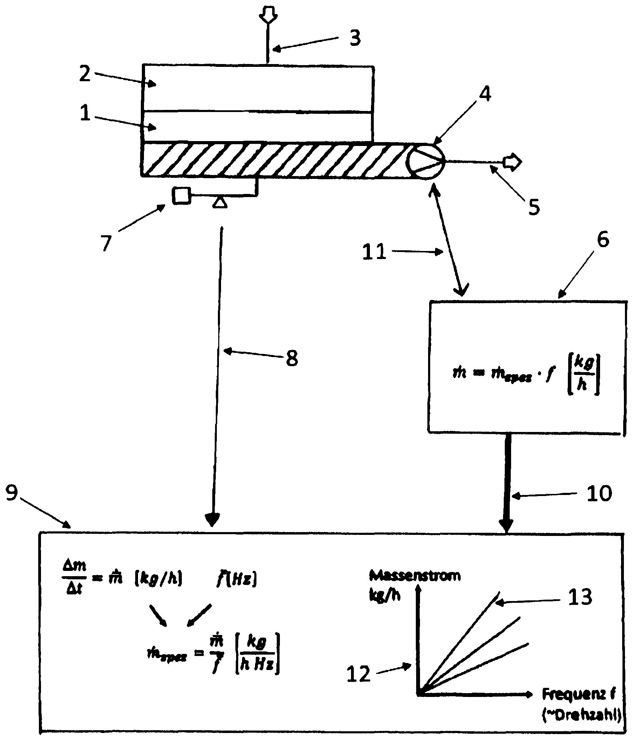

Dieser spezifische Massendurchfluss lässt sich als Steigung einer Geraden in einem Diagramm 12 verstehen, in dem der Massestrom in [kg/h] gegen die Frequenz des Umrichters in [kg/h] aufgetragen ist. Dabei ist der spezifische Massendurchfluss abhängig von dem Betriebszustand 13, in dem sich das Produkt befindet. Ein Produkt, wie die hier in Frage stehende Schmelzkäserohmasse, hat wenige - im vorliegenden Fall beispielsweise nur drei - definierte (natürliche) Betriebszustände 13, die sich in der Fließfähigkeit unterscheiden. Während der Verarbeitung ist der Betriebszustand 13, in dem sich das Produkt gerade befindet, und damit der Wert für den spezifischen Massendurchfluss jederzeit bekannt.

Mit dem Wert für den spezifischen Massendurchfluss lässt sich dann der von der Förderpumpe zu fördernde Massedurchfluss über die Vorgabe einer bestimmten Frequenz am Frequenzumrichter einstellen:

$$\dot{m} = \dot{m}_{spez} \cdot f \quad \left[\frac{kg}{h}\right]$$

Über den solchermaßen vorgebbaren Massedurchfluss lässt sich der gesamte Fertigungsprozess insbesondere der Förderstrom in einer Abfülllinie kontrollieren.

Ein besonders vorteilhafter Einsatz der erfindungsgemäßen Vorgehensweise bei der Fertigung von Schmelzkäseprodukten liegt in der Möglichkeit, die Konsistenz der zu verarbeitenden Rohmasse einzustellen respektive zu regeln:

Bekanntermaßen ist der Eiweißabbau je nach Reifungsgrad der im Schmelzkäse eingesetzten Käserohwaren unterschiedlich stark vorangeschritten. Dabei verliert der Käse mit fortschreitender Reifung die Fähigkeit zur Strukturbildung, so dass höhere Trockenmassengehalte eingestellt werden müssen, um die gewünschte Konsistenz zu gewährleisten. Auf der anderen Seite kann bei dem Einsatz besonders junger Rohware Trockenmasse eingespart werden, wobei die spezifizierten Trockenmassen als Untergrenze eingehalten werden müssen. Da die Schwankungen im Reifungsgrad der eingesetzten gereiften Käserohware meist erst im Schmelzprozess ersichtlich werden, ist es vorteilhaft, die Trockenmassen in der Rohmischung gezielt zu erhöhen und über eine mengengenaue Wasserdosierung so einzustellen, dass die Endkonsistenz des Schmelzkäses den Vorgaben entspricht. Um jedoch bei schwankenden Produktionsmengen eine mengengenaue Wasserdosierung gewährleisten zu können, muss der Mengenstrom der Käserohmischung bekannt sein.

Mit dem erfindungsgemäßen Verfahren der Mengenmessung lässt sich dieser Wert zuverlässig einstellen, so dass eine solche Konsistenzsteuerung respektive Konsistenzregelung ermöglicht wird. Dabei kann die Wasserzufuhr volumengenau mittels einer Kolbenmembranpumpe erfolgen, die automatisiert auf einen Viskositäts-Sollwert geregelt wird, wobei dieser mit einem Inline-Viskosimeter gemessenen werden kann. Alterativ kann die Regelung der Wasserzufuhr auch per Hand erfolgen. Dem Anlagenbediener wird in diesem Fall die Abweichung zur Sollkonsistenz visuell dargestellt.

Ein weiterer Einsatz der erfindungsgemäßen Vorgehensweise ist eine besonders vorteilhafte Anlagenregelung bei einem kontinuierlichen Erhitzungsprozess. Das Ziel dieser Anlagenregelung liegt darin, eine definierte Produktmenge in [kg/h] auf eine definierte Temperatur zu erhitzen, wobei die Produktmenge meist über indirekte Größen, wie Pumpendrehzahl oder Frequenz des Frequenzumrichters, geregelt und nicht über die effektiv zugeführte Produktmenge in [kg/h]. Die Einstellung über indirekte Größen ist jedoch nur zulässig, solange ein homogenes Produkt mit einheitlicher Dichte und Ausgangtemperatur verarbeitet wird. Nur dann korrelieren spezifische Pumpendrehzahlen und Frequenzen des Frequenzumrichters mit spezifischen Anlagendurchsätzen.

Wie oben schon ausgeführt, haben Schmelzkäserohmischungen ein anderes Verhalten. So ergeben sich je nach Rezeptur, Fettgehalt und Temperatur abweichende Porositäten und Fördereigenschaften. In Praxis kann das beispielsweise dazu führen, dass eine Pumpe bei derselben Einstellung am Frequenzumrichter zwischen 80 und 110 kg/h/Hz fördert.

Diesem Problem kann erfindungsgemäß dadurch begegnet werden, dass der erfindungsgemäß gemessene effektive Mengenstrom (kg/h) anstelle der reinen Pumpendrehzahl respektive der Frequenzumrichterfrequenz für die Regelung herangezogen wird. Dieser ist robust gegenüber dem schwankenden Förderverhalten der Pumpe und den Inhomogenitäten in der Produktbeschaffenheit.

**Patentansprüche**

1. Verfahren zum Bestimmen eines spezifischen Massendurchflusses eines hochviskosen Lebensmittelproduktes (1) mit einer Viskosität von größer als 100 cP (0,1 Pa·s), das während einer Verarbeitung in einem kontinuierlichen Förderstrom einem Pufferbehälter (2) mittels einer Förderpumpe (4) zu- oder abgeführt wird,
wobei mit einer Wiegeeinrichtung (7) die Änderung der Masse des Lebensmittelproduktes (1) in dem Pufferbehälter (2) über einen definierten Zeitraum, der insbesondere im Bereich einer oder mehrerer Minuten liegt, ermittelt wird ($\Delta m/\Delta t$),
wobei in demselben Zeitraum ein Pumpenparameter der Förderpumpe (4) registriert wird, der proportional zu der erwarteten Förderleistung ist, wobei Änderungen des Pumpenparameters über den Zeitraum zu einem mittleren Pumpenparameter gemittelt werden,
wobei der aktuelle spezifische Massendurchfluss als Quotient aus der zeitlichen Änderung der Masse $\Delta m/\Delta t$ und dem gemittelten Pumpenparameter errechnet und ausgegeben wird.

2. Verfahren nach Anspruch 1,
**dadurch gekennzeichnet,**
**dass** als Lebensmittelprodukt eine hochviskose bis pastöse Schmelzkäserohmischung (1) mit einer Viskosität von größer als 1000 cP (1 Pa·s), insbesondere größer als 5000 cP (5 Pa·s), verarbeitet wird.

3. Verfahren nach Anspruch 1 oder 2,
**dadurch gekennzeichnet,**
**dass** das Lebensmittelprodukt (1) dem Pufferbehälter (2) mittels der Förderpumpe (4) abgeführt und entsprechend die Abnahme der Masse ermittelt wird.

4. Verfahren nach Anspruch 3,
**dadurch gekennzeichnet,**
**dass** als Pumpenparameter die Drehzahl der Förderpumpe (4) pro Zeiteinheit registriert und/oder ein mit der Drehzahl in proportionalem Zusammenhang stehender Parameter, insbesondere die Frequenz des zur Ansteuerung der Förderpumpe (4) eingesetzten Frequenzumrichters in der Einheit [Hz], eingesetzt wird.

5. Verfahren nach Anspruch 4,
**dadurch gekennzeichnet,**
**dass** der aktuelle spezifische Massendurchfluss in der Einheit "Kilogramm pro Stunde und pro Umdrehungen Förderpumpe" oder "Kilogramm pro Stunde und pro Hz Frequenzumrichter" errechnet wird.

**6.** Verfahren nach Anspruch 4 oder 5,
**dadurch gekennzeichnet,**
**dass** der spezifische Massendurchfluss einem von mehreren Betriebszuständen der Förderpumpe (4) zugeordnet wird, wobei die Betriebszustände mit unterschiedlichen physikalischen Zuständen des Lebensmittelproduktes, insbesondere mit unterschiedlichen Viskositäten und/oder Porositäten und/oder Dichten und/oder Reibwerten des Lebensmittelproduktes, korrelieren.

**7.** Verfahren nach Anspruch 6,
**dadurch gekennzeichnet,**
**dass** das lineare Verhalten der Betriebszustände für die Regelung der Förderpumpe (4) zur Einstellung eines bestimmten Förderstromes genutzt wird, insbesondere des Förderstroms einer Abfülllinie.

**8.** Verfahren nach einem der vorherigen Ansprüche,
**dadurch gekennzeichnet,**
**dass** aus dem Wert für den spezifischen Massendurchfluss der von der Förderpumpe (4) zu fördernde Massedurchfluss über die Vorgabe einer Größe für den Pumpenparameter, insbesondere über die Vorgabe der Frequenz am Frequenzumrichter, eingestellt wird.

**9.** System zum Bestimmen eines spezifischen Massendurchflusses eines hochviskosen Lebensmittelproduktes (1) mit einer Viskosität von größer als 100 cP (0,1 Pa·s), insbesondere von größer als 1000 cP (1 Pa·s), aufweisend einen Pufferbehälter (2) und eine Förderpumpe (4) zur Zufuhr oder Abfuhr des Lebensmittelproduktes (1) in den oder aus dem Pufferbehälter (2) in einem kontinuierlichen Förderstrom umfassend:

eine Wiegeeinrichtung (7) zur Bestimmung der zeitlichen Änderung der Masse ($\Delta m/\Delta t$) des Lebensmittelproduktes (1) in dem Pufferbehälter (2) über einen definierten Zeitraum,
Mittel zur Bestimmung eines mittleren, zu der zu erwartenden Förderleistung proportionalen Pumpenparameters der Förderpumpe (4) in demselben Zeitraum und
Mittel zur Berechnung und Ausgabe des aktuellen spezifischen Massendurchflusses als Quotient aus der zeitlichen Änderung der Masse $\Delta m/\Delta t$ und dem gemittelten Pumpenparameter.

**Claims**

**1.** Method for determining a specific mass flow of a highly viscous food product (1) with a viscosity of greater than 100 cP (0.1 Pa·s)

which during processing in a continuous flow is supplied to or removed from a buffer container (2) by means of a feed pump (4),
wherein with a weighing device (7) the change in mass of the food product (1) in the buffer container (2) is determined over a defined period, which in particular is in the range one of more minutes ($\Delta m/\Delta t$), wherein in the same period a pump parameter of the feed pump (4) which is proportional to the expected flow rate is recorded, wherein the changes in the pump parameter are averaged over the period to a mean pump parameter,
wherein the current specific mass flow is calculated and outputted as a quotient from the temporal change of the mass $\Delta m/\Delta t$ and the mean pump parameter.

**2.** Method according to claim 1
**characterised in that**
as the food product, a highly viscous to paste-like raw processed cheese mixture (1) with a viscosity of greater than 1000 cP (1 Pa·s), more particularly greater than 5000 cp (5 Pa·s) is processed.

**3.** Method according to claim 1 or 2
**characterised in that**
the food product (1) is removed from the buffer container (2) by means of the feed pump (4) and the reduction in the mass is determined accordingly.

**4.** Method according to claim 3
**characterised in that**
as a pump parameter, the speed of the feed pump (4) per unit of time is recorded and/or a parameter proportional to the speed, in particular the frequency of the frequency converter used to control the feed pump (4) is used in the unit [Hz].

**5.** Method according to claim 4
**characterised in that**
the current specific mass flow is calculated in the unit "kilogram per hour and per revolution of feed pump" or "kilogram per hour and per Hz frequency converter".

**6.** Method according to claim 4 or 5
**characterised in that**
the specific mass flow is assigned to one of several operating statuses of the feed pump (4), wherein the operating statuses correlate with different physical conditions of the food product, in particular different viscosities and/or porosities and/or densities and/or friction coefficients of the food product.

**7.** Method according to claim 6
**characterised in that**
the linear behaviour of the operating statuses is used for regulating the feed pump (4) in order to set a particular flow rate, more particularly the flow rate of a filling line.

8. Method according to any one of the preceding claims **characterised in that** from the value for the specific mass flow, the mass flow to be conveyed by the feed pump (4) is set via specifying a variable for the pump parameter, in particular through specifying the frequency on the frequency converter.

9. System for determining a specific mass flow of a highly viscous food product (1) with a viscosity of greater than 100 cp (0.1 Pa·s), in particular greater than 1000 cP (1 Pa·s), having a buffer container (2) and a feed pump (4) for supplying or removing the food product (1) into or from the buffer container (2) in a continuous flow comprising:

> a weighing device (7) for determining the temporal change in mass (Δm/Δt) of the food product (1) in the buffer container (2) over a defined period of time,
> means for determining a mean pump parameter of the feed pump (4) proportional to the expected flow rate in the same period of time and
> means for calculating and outputting the current specific mass flow as a quotient of the temporal change of mass Δm/Δt and the mean pump parameter.

## Revendications

1. Procédé, destiné à déterminer un débit massique spécifique d'un produit alimentaire (1) hautement visqueux, faisant preuve d'une viscosité supérieure à 100 cP (0,1 Pa·s),
qui pendant une mise en œuvre dans un flux de convoyage continu est amené vers un ou évacué à partir d'un réservoir tampon (2) au moyen d'une pompe d'alimentation (4),
à l'aide d'un dispositif de pesage (7), la modification de la masse du produit alimentaire (1) dans le réservoir tampon (2) étant déterminée (Δm/Δt) sur une période définie, qui se situe notamment dans l'ordre d'une ou de plusieurs minutes,
dans la même période, un paramètre de pompage de la pompe d'alimentation (4) étant enregistré, qui est proportionnel à la puissance de convoyage attendue, le calcul de la moyenne des modifications du paramètre de pompage sur la période étant calculée en un paramètre de pompage moyen,
le débit massique spécifique actuel étant calculé en tant que quotient à partir de la modification dans le temps de la masse Δm/Δt et de la moyenne du paramètre de pompage et édité.

2. Procédé selon la revendication 1, **caractérisé en ce qu'**en tant que produit alimentaire, on met en œuvre un mélange brut hautement visqueux de fromage fondu (1) faisant preuve d'une viscosité supérieure à 1000 cP (1 Pa·s), notamment supérieure à 5000 cP (5 Pa·s).

3. Procédé selon la revendication 1 ou 2, **caractérisé en ce que** l'on évacue le produit alimentaire (1) du réservoir tampon (2) au moyen de la pompe d'alimentation (4) et on détermine en conséquence la diminution de la masse.

4. Procédé selon la revendication 3, **caractérisé en ce qu'**en tant que paramètre de pompage, l'on enregistre le régime de la pompe d'alimentation (4) par unité de temps et/ou un paramètre qui est en relation proportionnelle avec le régime, notamment la fréquence du convertisseur de fréquence utilisé pour l'activation de la pompe d'alimentation (4) dans l'unité [Hz].

5. Procédé selon la revendication 4, **caractérisé en ce que** l'on calcule le débit massique spécifique actuel dans l'unité « kilogramme par heure et par tours de la pompe d'alimentation » ou « kilogramme par heure et par Hz du convertisseur de fréquence ».

6. Procédé selon la revendication 4 ou 5, **caractérisé en ce que** l'on associe à la pompe d'alimentation (4) le débit massique spécifique à l'un parmi plusieurs états de service, les états de service étant en corrélation avec différents états physiques du produit alimentaire, notamment avec différentes viscosités et/ou porosités et/ou densités et/ou valeurs de frottement du produit alimentaire.

7. Procédé selon la revendication 6, **caractérisé en ce que** l'on utilise le comportement linéaire des états de service pour la régulation de la pompe d'alimentation (4) pour régler un certain flux de convoyage, notamment le flux de convoyage de la ligne de remplissage.

8. Procédé selon l'une quelconque des revendications précédentes, **caractérisé en ce que** l'on règle le débit massique qui doit être convoyé par la pompe d'alimentation (4) à partir de la valeur pour le débit massique spécifique, en prescrivant une grandeur pour le paramètre de pompage, notamment en prescrivant la fréquence sur le convertisseur de fréquence.

**9.** Système, destiné à déterminer un débit massique d'un produit alimentaire (1) hautement visqueux, faisant preuve d'une viscosité supérieure à 100 cP (0,1 Pa·s), notamment supérieure à 1000 cP (1 Pa·s), comportant un réservoir tampon (2) et une pompe d'alimentation (4), destinée à alimenter ou à évacuer le produit alimentaire (1) dans le ou à partir du réservoir tampon (2), dans un flux de convoyage continu, comprenant :

un dispositif de pesage (7), destiné à déterminer la modification dans le temps de la masse ($\Delta m/\Delta t$) du produit alimentaire (1) dans le réservoir tampon (2) sur une période définie, des moyens, destinés à déterminer un paramètre de pompage moyen de la pompe d'alimentation (4) dans la même période, proportionnel à la puissance de convoyage attendue et des moyens, destiné à calculer et à éditer le débit massique spécifique actuel, en tant que quotient de la modification dans le temps de la masse $\Delta m/\Delta t$ et de la moyenne du paramètre de pompage.

$$\dot{m} = \dot{m}_{spez} \cdot f \left[\frac{kg}{h}\right]$$

$$\frac{\Delta m}{\Delta t} = \dot{m} \ [kg/h] \qquad f[Hz]$$

$$\dot{m}_{spez} = \frac{\dot{m}}{f} \left[\frac{kg}{h\,Hz}\right]$$

Massenstrom
kg/h

Frequenz f
(~Drehzahl)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040186621 A1
- US 4796782 A
- US 3252618 A
- JP 2003075213 A